(19) Europäisches Patentamt
European Patent Office
Office européen des brevets

(11) **EP 4 001 708 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **21207385.2**

(22) Anmeldetag: **10.11.2021**

(51) Internationale Patentklassifikation (IPC):
**F16J 15/3208** (2016.01)   **F16J 15/3212** (2016.01)

(52) Gemeinsame Patentklassifikation (CPC):
**F16J 15/3208; F16J 15/3212**

(54) **DICHTRING UND DESSEN VERWENDUNG**

SEAL RING AND ITS USE

BAGUE D'ÉTANCHÉITÉ ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2020 DE 102020131045**

(43) Veröffentlichungstag der Anmeldung:
**25.05.2022 Patentblatt 2022/21**

(73) Patentinhaber: **Carl Freudenberg KG**
**69469 Weinheim (DE)**

(72) Erfinder:
• **Müller-Niehuus, Dr. Kristian**
**60438 Frankfurt (DE)**
• **Koch, Andreas**
**22393 Hamburg (DE)**
• **Shimizu, Akio**
**22527 Hamburg (DE)**

(56) Entgegenhaltungen:
| | |
|---|---|
| EP-A1- 1 669 647 | EP-A1- 3 872 373 |
| DE-A1-102016 011 448 | DE-A1-102019 109 273 |
| US-A- 2 697 623 | US-A- 2 797 944 |

EP 4 001 708 B1

## Beschreibung

### Technisches Gebiet

Die Erfindung betrifft einen Dichtring und dessen Verwendung, wobei der Dichtring, im Querschnitt betrachtet, 7-förmig ausgebildet ist, umfassend einen Axialschenkel und einen Dichtschenkel mit einer Dichtlippe, wobei der Dichtschenkel mittels eines Gelenks mit einer ersten Stirnseite des Axialschenkels verbunden ist und ein Spannelement zur Stabilisierung des Dichtschenkels in radialer Richtung, wobei das Spannelement ringförmig ausgebildet ist, wobei das Spannelement mit dem Dichtschenkel verbunden ist und wobei das Spannelement einen radial äußeren Rand aufweist, der einen Überstand bildet, mit dem sich das Spannelement aus dem Dichtschenkel heraus bis in den Axialschenkel erstreckt.

### Stand der Technik

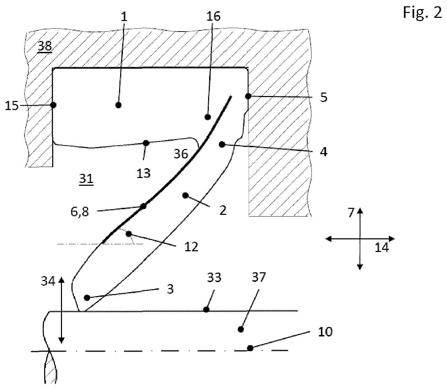

Ein solcher Dichtring nach dem Oberbegriff des Anspruchs 1 ist aus der DE 10 2019 109 273 A1 bekannt. Der Dichtring ist zur Abdichtung eines Maschinengehäuses an einer austretenden Welle gegenüber der Umgebung vorgesehen. Im Dichtschenkel ist ein auf die Dichtlippe wirkendes Spannelement zur Einstellung einer definierten Anpresskraft der Dichtlippe an ein abzudichtendes Maschinenelement vorgesehen, wobei das Spannelement in dem Dichtschenkel integriert angeordnet ist. In Figur 2 ist der Dichtring als kompaktes Komplettteil ausgeführt. Der Dichtring kann direkt in seinen Einbauraum eingepresst werden, wobei der Einbauraum durch einen in einer außenumfangsseitig angeordneten Nut gehaltenen O-Ring abgedichtet ist.

Aus der EP 2 988 035 A1 ist ein Dichtring bekannt, der zur Abdichtung von Schmierfett zur Anwendung gelangt. Der Dichtring umfasst ein Spannelement, das in einer Einbaunut des Dichtrings angeordnet ist. Die Einbaunut ist auf der der Dichtlippe radial abgewandten Seite des Dichtschenkels angeordnet, wobei die Einbaunut auf der der Dichtlippe radial abgewandten Seite eine Einbauöffnung für das Spannelement aufweist, die von zwei in axialer Richtung mit Abstand benachbart zueinander angeordneten Führungsstegen begrenzt ist. Das Gelenk ist, in radialer Richtung betrachtet und im herstellungsbedingten Zustand des Dichtrings, mittig des Dichtrings angeordnet. Ebenfalls in radialer Richtung mittig des Dichtrings ist im Bereich des Gelenks ein in axialer Richtung einseitig offener, im Wesentlichen C-förmig ausgebildeter Gelenkraum angeordnet. Dieser Gelenkraum ist derart ausgebildet, dass darin befindliches, abzudichtendes Medium aus diesem abgeleitet wird. Dadurch, dass sich kein abzudichtendes Medium innerhalb des Gelenkraums hält, wird eine unerwünschte Verhärtung des Dichtrings verhindert, und der Dichtschenkel vermag hohen dynamischen Auslenkbewegungen eines abzudichtenden Maschinenelements zu folgen, ohne dass sich die Anpresskräfte, mit denen die Dichtlippe das abzudichtende Maschinenelement dichtend berührt, nennenswert verändern.

Ein weiterer Dichtring der eingangs genannten Art ist aus der DE 10 2009 053 558 A1 bekannt. Der Dichtring ist 7-förmig ausgebildet und umfasst einen in radialer Richtung vergleichsweise dicken Axialschenkel und einen Dichtschenkel mit einer Dichtlippe, wobei der Dichtschenkel mittels eines Gelenks mit einer ersten Stirnseite des Axialschenkels verbunden ist. Ein separat erzeugtes Spannelement zur Stabilisierung des Dichtschenkels in radialer Richtung ist demgegenüber nicht vorgesehen. Das Gelenk ist, in radialer Richtung betrachtet und im herstellungsbedingten Zustand des Dichtrings, mittig des Dichtrings angeordnet. Die beiden Stirnseiten des Axialschenkels sind mit Erhebungen ausgebildet und mittels dieser Erhebungen in einem Einbauraum einer Dichtungsanordnung abgestützt, wobei durch die Erhebungen eine Verdrehung/ Verkippung des Dichtrings im Einbauraum während seiner bestimmungsgemäßen Verwendung verhindert wird. Die Erhebungen können als umfangsseitig umlaufende, in sich geschlossene Wülste ausgebildet sein, durch die sich eine besonders gute Klemmwirkung des Axialschenkels im Einbauraum ergibt.

Ein weiterer Dichtring und dessen Verwendung sind aus der DE 10 2016 011 448 A1 bekannt.

Der Dichtring weist ein Spannelement zur Stabilisierung des Dichtschenkels in radialer Richtung auf. Das Spannelement ist ringförmig ausgebildet und, im Querschnitt betrachtet, durch eine 7-förmig ausgebildete Feder gebildet. Das Spannelement weist einen zweiten Axialschenkel und einen Stabilisierungsschenkel auf, wobei der zweite Axialschenkel mit dem Axialschenkel und der Stabilisierungsschenkel mit dem Dichtschenkel verbunden ist.

Der vorbekannte Dichtring weist unabhängig von der Größe des abzudichtenden Durchmessers verbesserte Gebrauchseigenschaften während einer längeren Gebrauchsdauer auf. Unabhängig von der Einbausituation des Dichtrings berührt die Dichtlippe eine abzudichtende Oberfläche eines abzudichtenden Maschinenelements stets mit gleichbleibender radialer Vorspannung während einer langen Gebrauchsdauer dichtend. Durch das Spannelement spielt es für die guten Gebrauchseigenschaften keine Rolle, ob der Dichtschenkel mit seiner Dichtlippe radial innen des Dichtrings oder radial außen des Dichtrings angeordnet ist.

Aus der EP 1 669 647 A1 ist ein weiterer Dichtring zur Abdichtung eines Fahrwerklagers bekannt. Der Dichtring umfasst einen Dichtschenkel mit einer stirnseitig einerseits angeordneten Dichtlippe, die ein abzudichtendes Maschinenelement unter axialer Vorspannung anliegend berührt. Auf der der Dichtlippe axial abgewandten Stirnseite ist der Dichtschenkel an einem ringförmig und tellerfederförmig ausgebildeten Spannelement festgelegt.

Ein weiterer Dichtring ist aus der US 2 697 623 bekannt. Der Dichtring umfasst eine Dichtlippe, die einstückig ineinander übergehend und materialeinheitlich mit einem massiven Stützkörper verbunden ist. Mittels des Stützkörpers ist der Dichtring im Einbauraum eines Maschinenelements festgelegt. Um eine zuverlässige Festlegung des Dichtrings innerhalb seines Einbauraums zu gewährleisten, ist innerhalb des Stützkörpers ein ringförmiges und tellerfederförmig ausgebildetes Spannelement vorgesehen.

Aus der US 2 797 944 ist ein Dichtring bekannt, ähnlich wie zuvor beschrieben. Auch bei diesem Dichtring ist innerhalb eines massiv ausgebildeten Stützkörpers, an dem der Dichtschenkel mit der Dichtlippe festgelegt ist, ein ringförmig und tellerfederförmig ausgebildetes Spannelement angeordnet, um eine verbesserte Aufnahme des Dichtrings in einem Einbauraum zu gewährleisten.

Aus der DE 10 2016 011 448 A1 ist ein weiterer Dichtring bekannt. Der Dichtring ist, im Querschnitt betrachtet, 7-förmig ausgebildet, mit einem ersten Axialschenkel und einem Dichtschenkel mit einer Dichtlippe, wobei der Dichtschenkel mittels eines Gelenks mit einer ersten Stirnseite des Axialschenkels verbunden ist. Außerdem umfasst der Dichtring ein Spannelement zur Stabilisierung des Dichtschenkels in radialer Richtung. Das Spannelement ist ringförmig ausgebildet und in seinem Querschnitt an den Querschnitt des Dichtrings angepasst. Das Spannelement ist durch eine 7-förmig ausgebildete Feder gebildet und weist einen zweiten Axialschenkel und einen Stabilisierungsschenkel auf, wobei der zweite Axialschenkel mit dem ersten Axialschenkel und der Stabilisierungsschenkel mit dem Dichtschenkel verbunden ist.

Aus der EP 3 872 373 A1 ist ein Dichtring bekannt, wie zuvor beschrieben, jedoch mit einer zusätzlichen Schmutzlippe. Der Dichtschenkel weist auf seiner der ersten Stirnseite axial zugewandten Seite die Schmutzlippe mit zumindest einer Dichtkante und einer radial inneren ersten Begrenzungsfläche und einer radial äußeren zweiten Begrenzungsfläche auf.

Darstellung der Erfindung

Der Erfindung liegt die Aufgabe zu Grunde, einen Dichtring der eingangs genannten Art derart weiterzuentwickeln, dass er im Wesentlichen unabhängig vom abzudichtenden Durchmesser verbesserte Gebrauchseigenschaften während einer längeren Gebrauchsdauer aufweist, insbesondere dass die Dichtlippe unabhängig von der Einbausituation des Dichtrings eine abzudichtende Oberfläche eines abzudichtenden Maschinenelements mit gleichbleibender radialer Vorspannung während einer langen Gebrauchsdauer dichtend berührt.

Der Dichtring soll einfach und kostengünstig herstellbar sein.

Außerdem sollen Verwendungen gefunden werden, für die sich der erfindungsgemäße Dichtring besonders eignet.

Diese Aufgabe wird erfindungsgemäß mit den Merkmalen der Ansprüche 1 und 21 gelöst. Auf vorteilhafte Ausgestaltungen des Dichtrings nehmen die auf Anspruch 1 direkt oder indirekt rückbezogenen Ansprüche Bezug.

Zur Lösung der Aufgabe ist es vorgesehen, dass das Spannelement , im Querschnitt betrachtet, durch eine tellerfederförmig ausgebildete Feder gebildet ist, dass die Feder mit der Symmetrieachse des Dichtrings in seinem herstellungsbedingten Zustand einen ersten Winkel einschließt, der 65° bis 80° beträgt und dass die Feder mit der Symmetrieachse des Dichtrings während seiner bestimmungsgemäßen Verwendung einen zweiten Winkel einschließt, der 30° bis 60° beträgt.

Dadurch, dass die Feder nur im Dichtschenkel angeordnet ist, kann der Axialschenkel vergleichsweise dünn ausgeführt werden. Die Wärmekonzentration ist dadurch nur vergleichsweise gering, ebenso wie ein nachteiliger Einfluss auf die Anpresskraft der Dichtlippe.

Das Spannelement, das eine tellerfederförmige Gestalt aufweist, bewirkt die vorteilhaften Gebrauchseigenschaften des Dichtrings unabhängig davon, wie der Dichtring eingebaut ist. Der Dichtring ist omnidirektional verwendbar. Der Dichtschenkel mit seiner Dichtlippe kann radial innen des Dichtrings oder radial außen des Dichtrings oder axialdichtend angeordnet sein.

Im Gegensatz zu einer 7-förmig ausgebildete Feder, die der Form des gesamten Dichtrings entspricht, ist eine tellerfederförmige Feder einfacher und kostengünstiger herstellbar. Komplizierte produktionstechnische Prozesse sind zur Herstellung der Feder nicht erforderlich. Außerdem ist es einfacher, eine solche Feder nur mit dem Dichtschenkel des Dichtrings zu verbinden.

Der Dichtring aus der eingangs genannten EP 2 988 035 A1 ist hauptsächlich für radial innendichtende Systeme vorgesehen. Der Dichtschenkel und die Dichtlippe sind radial innen des Dichtrings angeordnet, wobei die Dichtlippe eine abzudichtende Oberfläche eines abzudichtenden Maschinenelements, beispielsweise einer Welle, unter radialer Vorspannung dichtend umschließt.

Für radial außendichtende Systeme, wenn der Axialschenkel radial innenseitig angeordnet ist und sich der Dichtschenkel mit seiner Dichtlippe, ausgehend vom Axialschenkel radial nach außen erstreckt, sind als Spannelemente ausgebildete Ringwendelfedern von Nachteil. Ringwendelfedern werden aktuell als Zugfedern für innendichtende Systeme verwendet. Bei außendichtenden Systemen müsste eine solche Feder als Druckfeder ausgeführt sein. Dies ist prinzipiell möglich, erschwert jedoch häufig die Montage und eine zuverlässige Positionierung im Einbauraum der Feder. Die Gefahr des Herausspringens aus dem Einbauraum im Vergleich zu einer Zugfeder ist weitaus höher.

Bei dem erfindungsgemäßen Dichtring wird als Spannelement demgegenüber eine tellerfederförmig ausgebildete Feder verwendet. Ein solcher Dichtring hat den Vorteil, dass er auch gut in außendichtenden Systemen zur Anwendung gelangen kann, bei denen sich also der Dichtschenkel mit der Dichtlippe radial nach außen erstreckt und zum Beispiel eine eine Gehäusebohrung begrenzende Wandung dichtend berührt.

Die Gebrauchseigenschaften des erfindungsgemäßen Dichtrings sind stets gleichbleibend gut, unabhängig davon, ob die Dichtlippe radial innenseitig oder radial außenseitig des Dichtrings angeordnet ist. Durch die zuvor beschriebene Gestalt der Feder kommt die radiale Federkraft aus der radialen Bewegung der Feder. Dabei ist es für den Gebrauch unerheblich, ob es sich um ein außen-oder ein innendichtendes System handelt. Die Anpressung der Dichtlippe an eine abzudichtende Oberfläche erfolgt aufgrund der elastischen Vorspannung der Feder gegenüber einer abzudichtenden Oberfläche eines abzudichtenden Maschinenelements in einer Dichtungsanordnung und ist damit durchmesserunabhängig umsetzbar. Die Gebrauchseigenschaften der Feder sind während der gesamten Gebrauchsdauer des Dichtrings praktisch gleichbleibend. Die Feder ist dauerelastisch.

Durch die tellerfederförmig ausgebildete Feder können vergleichsweise große radiale Auslenkbewegungen des abzudichtenden Maschinenelements gut ausgeglichen werden, ohne dass sich die Anpresskraft, mit der die Dichtlippe die abzudichtende Oberfläche unter elastischer Vorspannung dichtend berührt, nennenswert verändert.

Außerdem ist von Vorteil, dass die tellerfederförmig ausgebildete Feder einfach und kostengünstig herstellbar ist. Auch die Integration einer solchen Feder in einen Dichtring ist problemlos und prozesssicher möglich.

Die Feder kann, im herstellungsbedingten Zustand des Dichtrings, von radial innen nach radial außen eine geradlinige Erstreckung aufweisen. Hierbei ist von Vorteil, dass eine solche Feder besonders einfach und kostengünstig herstellbar ist. Auch die Verbindung mit dem Dichtschenkel, der durch die Feder während der bestimmungsgemäßen Verwendung des Dichtrings gestützt wird, ist einfach herzustellen.

Der radial äußere Rand der Feder erstreckt sich aus dem Dichtschenkel heraus bis in den elastomeren Werkstoff des Axialschenkels hinein. Der Überstand der Feder radial außen aus dem Dichtschenkel in den Axialschenkel beträgt bevorzugt zumindest 10 %, weiter bevorzugt zumindest 20 % der geradlinigen Erstreckung der Feder. Dadurch weist die Feder während der gesamten Gebrauchsdauer des Dichtrings eine ausreichend große Hebelwirkung auf, um den Dichtschenkel mit einer geeigneten radialen Anpresskraft an die abzudichtende Oberfläche eines abzudichtenden Maschinenelementen anzupressen.

Außerdem ist von Vorteil, dass die Feder zusätzlich im Axialschenkel fixiert ist und sich dadurch im Dichtring besser abstützen kann.

Die Feder schließt mit der Symmetrieachse des Dichtrings in seinem herstellungsbedingten Zustand einen ersten Winkel ein, der 65° bis 80° beträgt. Dieser herstellungsbedingte erste Winkel ist deutlich steiler als während der bestimmungsgemäßen Verwendung. Das ist erforderlich, um eine ausreichend große Anpresskraft der Dichtlippe des Dichtrings an eine abzudichtende Oberfläche während der bestimmungsgemäßen Verwendung des Dichtrings zu erreichen.

Die Feder schließt mit der Symmetrieachse des Dichtrings während seiner bestimmungsgemäßen Verwendung einen zweiten Winkel ein, der 30° bis 60° beträgt. Während des Einbaus des Dichtrings wird die Feder von ihrem eher steilen ersten Winkel im Anschluss an die Herstellung des Dichtrings in den zuvor genannten flacheren zweiten Winkel elastisch verformt. Dadurch wird die Dichtlippe unter elastischer radialer Vorspannung auf der abzudichtenden Oberfläche des abzudichtenden Maschinenelements gehalten.

Gemäß einer vorteilhaften Ausgestaltung kann es vorgesehen sein, dass die Feder im Dichtschenkel eingebettet ist. Hierbei ist von Vorteil, dass die Feder einen integralen Bestandteil des Dichtschenkels des Dichtrings bildet. Ein unerwünschter Verlust der Feder, sowohl bei der Lagerung des Dichtrings vor dessen Verwendung als auch während der bestimmungsgemäßen Verwendung im eingebauten Zustand, kann dadurch zuverlässig vermieden werden.

Die Feder kann vom Dichtschenkel zumindest im Wesentlichen umschlossen sein. Hierbei ist von Vorteil, dass die Positionierung der Feder im Dichtschenkel des Dichtrings besonders zuverlässig und dauerhaltbar ist. Der Dichtring erscheint dabei trotz Verwendung der Feder praktisch einteilig, und der Montageaufwand des Dichtrings ist dadurch gering. Auch die Gefahr von Montagefehlern ist auf ein Minimum begrenzt.

Nach einer vorteilhaften Ausgestaltung ist die Feder vom Dichtungswerkstoff des Dichtschenkels vollständig umschlossen.

Die Feder ist dadurch vor äußeren Einflüssen gut geschützt.

Die Gebrauchseigenschaften des Dichtrings, insbesondere die Schwenkbeweglichkeit des Dichtschenkels mit der Dichtlippe um das Gelenk, hängt im Wesentlichen von den Gebrauchseigenschaften der Feder ab. Auch bei größeren radialen Auslenkbewegungen eines abzudichtenden Maschinenelements im gesamten Arbeitsbereich des Dichtrings und entsprechenden Schwenkbewegungen des Dichtschenkels mit der Dichtlippe um das Gelenk, tritt keine unerwünschte Verhärtung des Dichtrings durch den Dichtungswerkstoff ein, der im spitzen Winkel zwischen dem Axialschenkel und dem Dichtschenkel angeordnet ist und bei Schwenkbewegungen des Dichtschenkels um das Gelenk unerwünscht gestaucht werden und die Gebrauchseigenschaften des Dichtrings dadurch nachteilig verändern könnte.

Die Feder kann aus einem Federstahl bestehen. Hierbei ist von Vorteil, dass die Feder auch während einer langen Gebrauchsdauer des Dichtrings nicht relaxiert und der Dichtring dadurch gleichbleibend gute Gebrauchseigenschaften während einer langen Gebrauchsdauer aufweist. Andere Werkstoffe, die für die Feder zur Anwendung gelangen können, können zum Beispiel polymere Werkstoffe sein, die ausreichend gute elastische Gebrauchseigenschaften während einer langen Gebrauchsdauer aufweisen.

Der Axialschenkel und der Dichtschenkel, weiter bevorzugt der Axialschenkel, der Dichtschenkel und das Gelenk, können einstückig ineinander übergehend und materialeinheitlich ausgebildet sein und aus einem Dichtungswerkstoff bestehen. Durch den einfachen und teilarmen Aufbau ist der Dichtring einfach und kostengünstig herstellbar. Der Dichtungswerkstoff kann ein Elastomer sein oder ein Polyurethan, wobei der Dichtungswerkstoff bevorzugt eine Härte Shore A von 60 bis 98 aufweist. Durch solche Werkstoffe wird eine gute Dichtwirkung während einer langen Gebrauchsdauer erreicht.

Nach einer vorteilhaften Ausgestaltung kann es vorgesehen sein, dass der Axialschenkel auf seiner dem Dichtschenkel radial zugewandten Seite einen Hinterschnitt aufweist, der sich in axialer Richtung von einer zweiten Stirnseite des Axialschenkels in Richtung der ersten Stirnseite und des Gelenks erstreckt. Generell hat es sich als vorteilhaft bezüglich der Gebrauchseigenschaften, insbesondere bezüglich der Gebrauchseigenschaften des Dichtrings in radial außendichtenden Systemen, herausgestellt, wenn das Gelenk zwischen Axialschenkel und Dichtschenkel in radialer Richtung möglichst weit von der Dichtlippe entfernt angeordnet ist. Dadurch vermag der Dichtschenkel radialen Auslenkbewegungen eines abzudichtenden Maschinenelements auch dann besonders gut zu folgen, wenn diese Auslenkbewegungen in radialer Richtung vergleichsweise groß sind. Die Größe der radialen Auslenkbewegungen ist abhängig vom abzudichtenden Durchmesser. Die abzudichtenden Durchmesser bei Windkraftanlagen können zum Beispiel 4 m betragen, die abzudichtenden Durchmesser bei Tunnelbohrmaschinen zum Beispiel 18 m.

Durch das in radialer Richtung von der Dichtlippe möglichst weit entfernt angeordnete Gelenk und die daraus resultierende gute elastische Nachgiebigkeit des

Dichtschenkels im gesamten Arbeitsbereich des Dichtrings, berührt die Dichtlippe die abzudichtende Oberfläche auch in einem solchen Fall mit einer gleichbleibend guten radialen Anpressung und dadurch Dichtwirkung über dem gesamten Umfang.

Begünstigt werden die zuvor beschriebenen, vorteilhaften Gebrauchseigenschaften des Dichtrings dadurch, dass das Gelenk, in radialer Richtung betrachtet und im herstellungsbedingten Zustand des Dichtrings, im weitesten von der Dichtlippe abgewandten Drittel des Dichtrings angeordnet ist.

Die Ausgleichsfähigkeit bei hohen Exzentrizitäten und großen abzudichtenden Durchmessern ist bei Dichtringen, bei denen das Gelenk, in radialer Richtung betrachtet und im herstellungsbedingten Zustand des Dichtrings, ungefähr mittig des Dichtrings angeordnet ist, im Vergleich zu der zuvor beschriebenen Ausgestaltung deutlich geringer.

Wie zuvor bereits beschrieben, kann die Dichtlippe in radialer Richtung innen oder außen des Dichtrings angeordnet sein. Überraschend hat sich gezeigt, dass der Dichtring unabhängig davon, ob die Dichtlippe radial innen oder radial außen des Dichtrings angeordnet ist, gleichbleibend gute Gebrauchseigenschaften aufweist. Radial außen angeordnete abzudichtende Oberflächen lassen sich durch den Dichtring mit der gleichen Zuverlässigkeit abdichten, wie radial innen angeordnete abzudichtende Oberflächen.

Nach einer vorteilhaften Ausgestaltung kann es vorgesehen sein, dass der Dichtschenkel auf seiner der ersten Stirnseite axial zugewandten Seite eine Schmutzlippe mit zumindest einer Dichtkante und einer radial inneren ersten Begrenzungsfläche und einer radial äußeren zweiten Begrenzungsfläche aufweist. Durch das Vorsehen einer Schmutzlippe auf der der Umgebung des Dichtrings zugewandten Seite der Dichtlippe ist diese wirkungsvoll vor einer Beaufschlagung mit Verunreinigungen geschützt. Insbesondere bei Verwendung des Dichtrings in einer stark verunreinigten Umgebung, ist die Schmutzlippe, die der Dichtlippe in Richtung Umgebung in einer funktionstechnischen Reihenschaltung vorgeschaltet ist, von hervorzuhebendem Vorteil. Die Verunreinigungen werden durch die Schmutzlippe an einem Vordringen zur Dichtlippe gehindert. Die durch die Schmutzlippe geschützte Dichtlippe funktioniert dadurch während einer langen Gebrauchsdauer gleichbleibend gut.

Die Schmutzlippe kann mittels eines zweiten Gelenks am Dichtschenkel angelenkt sein. Hierdurch ist von Vorteil, dass der Dichtschenkel und die Schmutzlippe funktionstechnisch gekoppelt sind. Bewegt sich der Dichtschenkel während der bestimmungsgemäßen Verwendung des Dichtrings in seinem Arbeitsbereich in radialer Richtung nach außen oder innen, folgt die Schmutzlippe in entsprechender Weise, weil sie mittels des zweiten Gelenks am Dichtschenkel angelenkt ist.

Durch die Anlenkung der Schmutzlippe am Dichtschenkel folgt die Schmutzlippe dem Dichtschenkel automatisch über seinen gesamten radialen Arbeitsbereich entsprechend, ohne die Funktion der Dichtlippe am Dichtschenkel nachteilig zu beeinflussen.

Das zweite Gelenk kann einen radial inneren Gelenkradius und einen radial äußeren Gelenkradius aufweisen, durch die die Schmutzlippe in den Dichtschenkel übergehend ausgebildet ist.

Der innere und der äußere Gelenkradius können im Wesentlichen gleich groß sein. Das Verhältnis aus innerem Gelenksradius zu äußerem Gelenksradius würde dann etwa 1 betragen.

Durch die Ausgestaltung der Gelenkradien kann deren individuelle Funktion unabhängig voneinander an den jeweiligen Anwendungsfall angepasst werden. Der radial innere Gelenkradius nimmt überwiegend Einfluss auf die Kontaktkraft, mit der die Schmutzlippe das abzudichtende Maschinenelement während der bestimmungsgemäßen Verwendung des Dichtrings anliegend umschließt. Der radial äußere Gelenkradius beeinflusst demgegenüber die Flexibilität der Schmutzlippe in radialer Richtung.

Der Dichtschenkel und die Schmutzlippe können im herstellungsbedingten Zustand des Dichtrings radial innen und radial außenseitig einen im Wesentlichen rechten Winkel begrenzen. Durch eine solche Ausgestaltung wird ein guter Kompromiss aus guter Dichtwirkung der Schmutzdichtung einerseits und einem Betrieb der Schmutzlippe auf dem abzudichtenden Maschinenelement mit möglichst geringen Reibungsverlusten andererseits erreicht.

Dazu trägt auch bei, wenn, jeweils im herstellungsbedingten Zustand des Dichtrings betrachtet, die Dichtlippe einen ersten Durchmesser und die Dichtkante einen zweiten Durchmesser aufweist, wobei der erste Durchmesser kleiner als der zweite Durchmesser ist. Während der bestimmungsgemäßen Verwendung des Dichtrings, also in seinem eingebauten Zustand in eine Dichtungsanordnung, umschließt die Dichtlippe das abzudichtende Maschinenelement mit vergleichsweise größerer radialer Vorspannung als die Dichtkante.

Die zuvor beschriebenen, vorteilhaften Gebrauchseigenschaften können dadurch weiter begünstigt werden, dass die den rechten Winkel radial innen der Schmutzlippe begrenzende erste Begrenzungsfläche eine erste Länge und eine dritte Begrenzungsfläche des Dichtschenkels eine von der ersten Länge abweichende dritte Länge aufweist, wobei die erste Länge größer als die dritte Länge ist.

Der Dichtschenkel und die Schmutzlippe sind bevorzugt einstückig ineinander übergehend und materialeinheitlich ausgebildet und bestehen aus einem gummielastischen Dichtungswerkstoff. Hierbei ist von Vorteil, dass der Dichtring einen einfachen und teilearmen Aufbau aufweist und dadurch einfach und kostengünstig herstellbar ist. Durch die Einstückigkeit ist außerdem die Montage besonders einfach; die Gefahr montagebedingter Fehler beim Einbau des Dichtrings ist dadurch auf ein Minimum begrenzt.

Gemäß einer vorteilhaften Ausgestaltung kann es vorgesehen sein, dass die zweite Begrenzungsfläche entlang ihrer Erstreckung konvex ausgebildet ist. Die konvexe Geometrie der zweiten Begrenzungsfläche der Schmutzlippe ist erforderlich, um einen definierten Linienkontakt der Dichtkante der Schmutzlippe zu erreichen. Der Krümmungsradius der konvexen Begrenzungsfläche ist dabei so gewählt, dass ein Flächenkontakt der Schmutzlippe auf einem abzudichtenden Bauteil während der bestimmungsgemäßen Verwendung des Dichtrings und damit einhergehende verschlechterte Gebrauchseigenschaften sicher vermieden werden.

Auf der der Schmutzlippe axial abgewandten Seite des Dichtschenkels ist die Feder angeordnet, zur Stabilisierung des Dichtschenkels in radialer Richtung.

Nach einer vorteilhaften Ausgestaltung kann es vorgesehen sein, dass die Dichtlippe auf ihrer einem abzudichtenden Raum axial abgewandten Seite, im Schnitt betrachtet, im Wesentlichen durch eine Parabel gebildet ist, derart, dass die Parabel und eine abzudichtenden Oberfläche über den gesamten radialen Arbeitsbereich der Dichtlippe einen im Wesentlichen konstanten Dichtwinkel begrenzen. Durch die parabelförmige Gestalt ist die Dichtlippe auch zur Abdichtung von öligen Medien besonders gut geeignet. Auch ölige Medien können mit einer vernachlässigbar geringen Leckage zuverlässig abgedichtet werden.

Insbesondere Dichtringe mit großen Durchmessern, wie zum Beispiel Dichtringe für Tunnelbohrmaschinen oder Windkraftanlagen, müssen auch große radiale Auslenkbewegungen von gegeneinander abzudichtenden Maschinenelementen gut ausgleichen können und dabei weiterhin gut abdichten. Mit einer praktisch scharfkantigen Dichtlippe, wie sie zum Beispiel bei Radialwellendichtringen zur Anwendung gelangt, ist das nicht zu erreichen.

Radialwellendichtringe sind zur Abdichtung ölhaltiger Medien vorgesehen und basieren auf einem hydrodynamischen Konzept von zwei sich gegenüberstehenden unterschiedlichen Winkeln. Ein vergleichsweise steilerer Winkel zur Ölseite, der mit einer Symmetrieachse des Radialwellendichtrings einen Winkel von 40° bis 50° einschließt und ein vergleichsweise flacherer Winkel zur Umgebungsseite, der mit der Symmetrieachse einen Winkel von 20 bis 30° einschließt. Die Winkel stehen in einer festen Beziehung zueinander, die auch dann erhalten bleibt, wenn sich die Lage der gegeneinander abzudichtenden Maschinenelement in radialer Richtung ändert. Daraus folgt, dass sich die Winkel zum abzudichtenden Maschinenelement in einem solchen Fall jedoch unerwünscht verändern. Für große Auslenkbewegungen und eine gute Funktion in einem großen radialen Arbeitsbereich des Dichtrings sind Radialwellendichtringe weniger gut geeignet.

Durch den während der bestimmungsgemäßen Verwendung stark unterschiedlich schräg stehenden Dichtschenkel, bezogen auf die Symmetrieachse des Dichtrings, wäre die Dichtwirkung des Dichtrings eingeschränkt und es würde zu einer unerwünschten Leckage kommen.

Durch die parabelförmige Gestalt des Dichtschenkels auf seiner einem abzudichtenden Maschinenelementen zugewandten Seite werden durch den Dichtschenkel und das abzudichtende Maschinenelementen über den gesamten radialen Arbeitsbereich der Dichtlippe, den diese während der bestimmungsgemäßen Verwendung des Dichtring aufweist, ein stets gleichbleibender Dichtwinkel und damit ein stets gleichbleibend gutes Abdichtungsergebnis erzielt.

Die annähernde Parabel kann durch folgende Funktion beschrieben sein:

$$f(x) = a1 \cdot x^2 + a2 \cdot \sin(f1 \cdot x)$$

a1: erster Stauchungsfaktor
a2: zweiter Stauchungsfaktor
f1: Frequenz
X: axiale Richtung

Die Dichtlippe verläuft im Wesentlichen parabelförmig, ist jedoch deutlich asymmetrisch aufgebaut. Beide Konturen der Dichtlippe in axialer Richtung, die zum abzudichtenden Raum und die zur Umgebungsseite hin, sind jeweils konvex gekrümmt. Jedoch weichen beide konvexen Verläufe von der klassischen Parabelform ab. Dies erfolgt durch die Berücksichtigung eines Sinus-Terms in der Parabelform.

Ausgehend vom Punkt X-Achse =0 verlaufen in negativer axialer X-Richtung (zum abzudichtenden Raum hin) die Parabel und der Sinus gegenläufig in ihren radialen Y-Werten. Hierdurch wird anfänglich die Parabel abgeflacht. Sobald der Sinus seinen Tiefpunkt erreicht hat, verstärkt dieser den Parabelverlauf und die resultierenden Funktionswerte steigen steiler an.

In positiver X-Richtung hingegen, steigt der Sinus anfänglich schneller als die Parabel und dominiert die Kontur. Sobald der Sinus sein Maximum erreicht hat und fällt, wirkt der Sinus dämpfend auf die dann dominierende Parabel.

Bei geeigneter Wahl der Koeffizienten von Parabel a1 und a2, f1 Sinus bildet sich eine Kontur aus, welche um X=0 eine konstante positive Steigung aufweist, während sich in negativer Richtung eine steile konvexe Kontur anschließt und während sich in positiver X-Richtung eine flacherer konvexe Kontur anschließt.

Das Überraschende ist, dass bei geeigneter Wahl der jeweiligen Koeffizienten erreicht wird, dass im verwendungsmäßigen Einbau und geringer Auslenkung des abzudichtenden Maschinenelements, bezogen auf den Dichtring, die konstante Steigung einen klassischen flachen Winkel zur Umgebungsseite hin bildet. Sobald die Auslenkungen größer werden, wirkt die immer steiler werdende Kontur einer weiteren Abflachung entgegen. Somit wird erreicht, dass eine definierte Dichtfläche erhalten bleibt. Reibung und Wärmeeintrag werden minimiert.

Das Minimum der Funktion entspricht im verwendungsmäßigen Einbau und in der Nulllage der Dichtung der klassischen Dichtkante.

Der Verlauf der Kontur der Dichtlippe zum abzudichtenden Medium hin, ist im bestimmungsgemäßen Gebrauch hingegen so ausgelegt, dass sich ein steiler Winkel einstellt. In Nulllage liegt der klassische Winkel der Seite zum abzudichtenden Medium hin, vor. Bei Auslenkung nach oben (Stauchung der Dichtlippe) würde der Winkel steiler werden. Da die oben beschrieben konvexe Kontur jedoch in positiver X-Richtung abrollt, kommt eine immer flachere Kontur zu tragen. Die flacher werdende Kontur wirkt der auslenkungsbedingten Steilstellung entgegen. Genau anders herum, bei negativer radialer Auslenkung. Der zum abzudichtenden Medium, zum Beispiel zur Ölseite, hin immer flacher werdende Winkel wird durch die immer steiler werdende Kontur kompensiert. Hierdurch wird die klassische Steilstellung weitestgehend erhalten.

Der zuvor beschriebene Dichtring kann in Tunnelbohrmaschinen, Windkraftanlagen oder anderen Radialanwendungen verwendet werden.

Kurzbeschreibung der Zeichnung:

Zwei Ausführungsbeispiele des erfindungsgemäßen Dichtrings werden nachfolgen anhand der Figuren 1 bis 4 näher erläutert.

Diese zeigen jeweils in schematischer Darstellung:

Figur 1 ein erstes Ausführungsbeispiel des erfindungsgemäßen Dichtrings in seiner herstellungsbedingten Form,

Figur 2 das erste Ausführungsbeispiel aus Figur 1, wobei der Dichtring während seiner bestimmungsgemäßen Verwendung in einer Dichtungsanordnung gezeigt ist,

Figur 3 ein zweites Ausführungsbeispiel des erfindungsgemäßen Dichtrings in seiner herstellungsbedingten Form, mit einer dem Dichtschenkel benachbart zugeordneten Schmutzlippe,

Figur 4 das zweite Ausführungsbeispiel aus Figur 3, wobei der Dichtring während seiner bestimmungsgemäßen Verwendung in einer Dichtungsanordnung gezeigt ist und

Figur 5 ein Detail des freien Endes der Dichtlippe aus den Figuren 3 und 4.

Ausführung der Erfindung

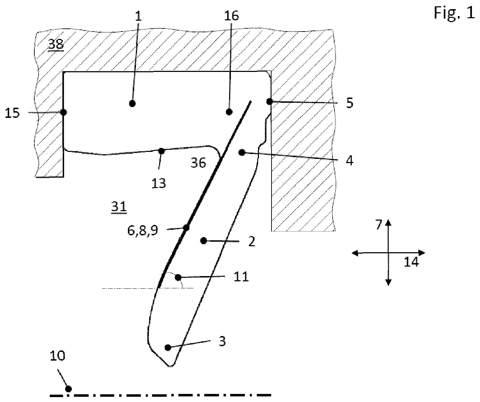

In den Figuren 1 und 2 ist ein erstes Ausführungsbeispiel des erfindungsgemäßen Dichtrings gezeigt. Der Dichtring ist 7-förmig ausgebildet und weist als Spannelement 6 eine Feder 8 auf, die einen integralen Bestandteil des Dichtrings bildet und vom Dichtungswerkstoff des Dichtrings vollständig umschlossen ist.

Die Feder 8 ist ringförmig und, im Querschnitt betrachtet, tellerfederförmig ausgebildet.

Der Dichtring umfasst den Axialschenkel 1 und den Dichtschenkel 2 mit der Dichtlippe 3, wobei, je nach Anwendungsfall, der Dichtschenkel 2 und die Dichtlippe 3 radial innen oder radial außen des Dichtrings angeordnet sind. Der Dichtring ist omnidirektional verwendbar.

Der Dichtschenkel 2 ist mittels des Gelenks 4 an der ersten Stirnseite 5 des Axialschenkels 1 angelenkt, wobei das Gelenk 4 von der Dichtlippe 3 in radialer Richtung 7 möglichst weit entfernt angeordnet ist, um auch große Exzentrizitäten eines Maschinenelements 37 ausgleichen zu können. Diese großen Exzentrizitäten treten hauptsächlich dann auf, wenn der abzudichtende Durchmesser groß ist, zum Beispiel etwa 2 m oder mehr beträgt. Der Arbeitsbereich des Dichtrings ist mit Bezugszeichen 34 bezeichnet.

Das Gelenk 4 ist einstückig ineinander übergehend und materialeinheitlich mit dem Axialschenkel 1 und dem Dichtschenkel 2 ausgebildet. In radialer Richtung 7 betrachtet und im herstellungsbedingten Zustand des Dichtrings, ist das Gelenk 4 im weitesten von der Dichtlippe 3 abgewandten Drittel 16 des Dichtrings angeordnet. Zur noch weiteren Verbesserung der Schwenkbeweglichkeit im Arbeitsbereich 34 des Dichtschenkels 2 relativ zum Axialschenkel 1 um das Gelenk 4 herum ist es vorgesehen, dass der Axialschenkel 1 auf seiner dem Dichtschenkel 2 radial zugewandten Seite den Hinterschnitt 13 aufweist, der sich in axialer Richtung 14 von der zweiten Stirnseite 15 des Axialschenkels 1 zur ersten Stirnseite 5 und zum Gelenk 4 erstreckt.

Im ersten Ausführungsbeispiel ist die dem abzudichtenden Raum 31 axial abgewandte Seite der Dichtlippe 3 im Wesentlichen scharfkantig ausgebildet.

Eine solche Dichtlippe 3 ist zur Abdichtung von Fett besonders gut geeignet.

Der Gelenkraum 36 wird durch die einander zugewandten Seiten von Axialschenkel 1 und Dichtschenkel 2 begrenzt ist. Die Feder 8 ist im Wesentlichen direkt unter der Oberfläche des Dichtschenkels 2 angeordnet. Die Feder 8 erstreckt sich im Wesentlichen parallel zum Dichtschenkel 2. Die Feder 8 sorgt dafür, dass der Dichtschenkel 2 und damit die Dichtlippe 3 einem abzudichtenden Maschinenelement in Umfangsrichtung während einer langen Gebrauchsdauer mit stets gleichem Anpressdruck zugeordnet sind, wobei die Dichtlippe 3 eine Oberfläche eines abzudichtenden Maschinenelements dichtend berührt.

Radial außenseitig ragt die Feder 8 bis in den Axialschenkel 1 hinein. Durch die tellerfederförmig ausgebildete Feder 8 werden Exzentrizitäten der gegeneinander abzudichtenden Maschinenelementen 37, 38 im gesamten Arbeitsbereich 34 gut ausgeglichen. Im gesamten Arbeitsbereich berührt der Dichtschenkel das abzudichtende Maschinenelement 37 mit im Wesentlichen gleicher radialer Vorspannung.

Das abzudichtende erste Maschinenelement 37 ist einem abzudichtenden zweiten Maschinenelement 38 mit radialem Abstand zugeordnet.

Die Feder 8 erstreckt sich geradlinig von radial innen nach radial außen. Eine solche Feder 8 ist besonders einfach und kostengünstig herstellbar. Auch die Verbindung mit dem Dichtschenkel 2, der durch die Feder 8 während der bestimmungsgemäßen Verwendung des Dichtrings gestützt wird, ist einfach herzustellen.

Im gezeigten Ausführungsbeispiel erstreckt sich der radial äußere Rand der Feder 8 aus dem Dichtschenkel heraus in den elastomeren Werkstoff des Axialschenkels 1. 10 % der radialen Länge der Feder 8 sind vom elastomeren Werkstoff des Axialschenkels 1 umschlossen.

Wird der Dichtschenkel 2 von seiner herstellungsbedingten Form, in Figur 1 dargestellt, seine Form während der bestimmungsgemäßen Verwendung, in Figur 2 dargestellt, elastisch verformt, hält die Feder 8 den Dichtschenkel 2 durch eine Hebelwirkung mit einer passenden radialen Anpresskraft an der abzudichtenden Oberfläche des abzudichtenden Maschinenelements 37.

Im herstellungsbedingten Zustand schließt die Feder 8 mit der umfänglich verlaufenden Symmetrieachse 10 des Dichtrings einen ersten Winkel 11 ein, der im gezeigten Ausführungsbeispiel etwa 75° beträgt.

Während der bestimmungsgemäßen Verwendung beträgt der zweite Winkel 12 demgegenüber im gezeigten Ausführungsbeispiel etwa 45°.

Das abzudichtende Maschinenelement 37, 38 kann, radial innendichtend, durch eine abzudichtende Welle oder, radial außendichtend, durch eine eine Gehäusebohrung begrenzende, abzudichtende Wandung gebildet sein.

Die Gebrauchseigenschaften des erfindungsgemäßen Dichtrings sind stets gleichbleibend gut, unabhängig davon, ob die Dichtlippe 3 radial innenseitig oder radial außenseitig des Dichtrings angeordnet ist. Die Anpressung der Dichtlippe 3 an eine abzudichtende Oberfläche erfolgt aufgrund der elastischen Biegung der Feder 8 und ist damit durchmesserunabhängig.

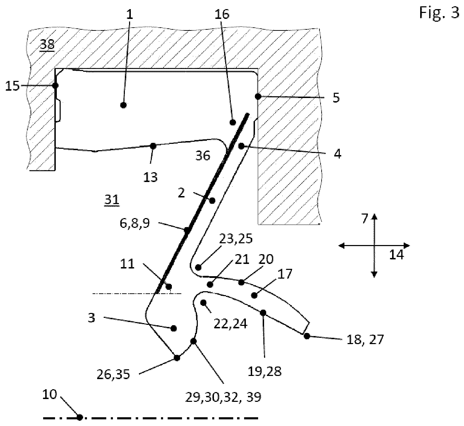

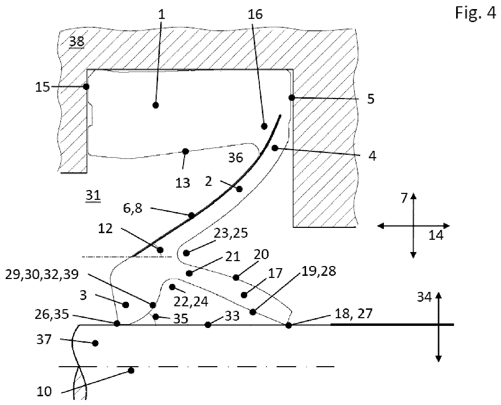

In den Figuren 3 und 4 ist ein zweites Ausführungsbeispiel des erfindungsgemäßen Dichtrings gezeigt. Der Dichtring ist, im Querschnitt betrachtet, 7-förmig ausgebildet und umfasst den Axialschenkel 1 und den Dichtschenkel 2 mit der Dichtlippe 3. Der Dichtschenkel 2 ist mittels des Gelenks 4 an der ersten Stirnseite 5 des Axialschenkels 1 angelenkt.

Auf der der ersten Stirnseite 5 axial zugewandten Seite des Dichtschenkels 2 ist im radial inneren Bereich des Dichtschenkels 2 die Schmutzlippe 17 angeordnet, die die Dichtkante 18 umfasst. Die Schmutzlippe 17 hat radial innenseitig die erste Begrenzungsfläche 19 und radial außenseitig die zweite Begrenzungsfläche 20. Die erste Begrenzungsfläche 19 ist im Wesentlichen eben, die zweite Begrenzungsfläche 20 demgegenüber konvex ausgebildet.

Der Dichtschenkel 2 und die Schmutzlippe 17 sind einstückig ineinander übergehend und materialeinheitlich ausgebildet, bestehen aus einem gummielastischen Werkstoff und sind mittels des zweiten Gelenks 21 elastisch nachgiebig miteinander verbunden. Das zweite Gelenk 21 ist durch einen radial inneren Gelenkradius 22 und einen radial äußeren Gelenkradius 23 gebildet, die im gezeigten Beispiel im Wesentlichen gleich ausgebildet sind.

In Figur 3 ist der Dichtring in seinem herstellungsbedingten Zustand gezeigt, also nicht in eine Dichtungsanordnung eingebaut, wie in Figur 4 dargestellt. Wie hier dargestellt, ragt die Schmutzlippe 17 im Wesentlichen senkrecht vom Dichtschenkel 2 ab, wobei der erste Durchmesser 26 der Dichtlippe 3 kleiner als der zweite Durchmesser 27 der Dichtkante 18 ist. Der Dichtschenkel 2 und die Schmutzlippe 17 begrenzen die im Wesentlichen rechten Winkel 24, 25.

Die den rechten Winkel 24 radial innen der Schmutzlippe 17 begrenzende erste Begrenzungsfläche 19 hat die erste Länge 28. Die dritte Begrenzungsfläche 29 des Dichtschenkels 2 hat die dritte Länge 30, die von der ersten Länge 28 abweichend ist. Die erste Länge 28 ist größer als die dritte Länge 30. Durch die Geometrie der Schmutzlippe 17, die Geometrie des Dichtschenkels 2 radial innenseitig des zweiten Gelenks 21 und die Anlenkung der Schmutzlippe 17 am Dichtschenkel 2 wird erreicht, dass die Schmutzlippe 17 einen integralen Bestandteil des Dichtrings bildet und sich mit dem Dichtschenkel 2 gemeinsam im Arbeitsbereich in radialer Richtung bewegt. Die Dichtlippe 3 des Dichtschenkels 2 wird durch die Schmutzlippe 17 vor einer Beaufschlagung mit Verunreinigungen aus der Umgebung des Dichtrings während der bestimmungsgemäßen Verwendung des Dichtrings geschützt. Die Schmutzlippe 17 funktioniert über den gesamten Arbeitsbereich 34 des Dichtrings, ohne die Funktion der Dichtlippe 3 nachteilig zu beeinflussen.

Auf der der Schmutzlippe 17 axial abgewandten Seite des Dichtschenkels 2 ist das Spannelement 6 angeordnet. Das Spannelement 6 ist zur Stabilisierung des Dichtschenkels 2 in radialer Richtung vorgesehen. Das Spannelement 6 wird durch die Feder 8 gebildet, die im hier gezeigten Ausführungsbeispiel aus einem dauerelastischen Federstahl besteht.

Im zweiten Ausführungsbeispiel ist die dem abzudichtenden Raum 31 axial abgewandte Seite der Dichtlippe 3 durch ein Parabel 32 gebildet. Die Parabel 32 berührt die abzudichtenden Oberfläche 33 des abzudichtenden Maschinenelements 37 über den gesamten radialen Arbeitsbereich 34 der Dichtlippe 3 mit einem im Wesentlichen konstanten Dichtwinkel 35.

Eine solche im Wesentlichen parabelförmige Geometrie ist zur Abdichtung dünnflüssiger Medien, wie zum Beispiel Öl, besonders gut geeignet.

Aufgrund der guten Gebrauchseigenschaften während einer langen Gebrauchsdauer, auch dann, wenn der Dichtring radial außendichtend ist, ist der erfindungsgemäße Dichtring besonders gut für die Verwendung in Tunnelbohrmaschinen oder Windkraftanlagen geeignet.

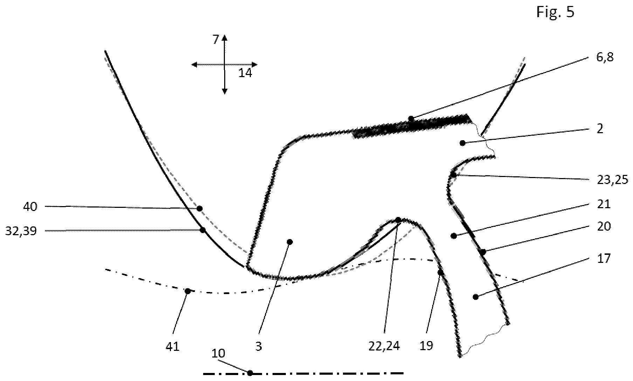

In Figur 5 ist das freie Ende der Dichtlippe 3 aus den Figuren 3 und 4 als Detail gezeigt.

Die Dichtkantengeometrie 39 folgt im Wesentlichen der Geometrie einer Parabel 40.

Die Dichtkantengeometrie 39 folgt der Funktion:

$$f(x) = a1*x^2+a2*sin(f1*x)$$

Der Sinus hat das Bezugszeichen 41.

**Patentansprüche**

1. Dichtring, der, im Querschnitt betrachtet, im Wesentlichen 7-förmig ausgebildet ist, umfassend einen Axialschenkel (1) und einen Dichtschenkel (2) mit einer Dichtlippe (3), wobei der Dichtschenkel (2) mittels eines Gelenks (4) mit einer ersten Stirnseite (5) des Axialschenkels (1) verbunden ist und ein Spannelement (6) zur Stabilisierung des Dichtschenkels (2) in radialer Richtung (7), wobei das Spannelement (6) ringförmig ausgebildet ist, wobei das Spannelement (6) mit dem Dichtschenkel (2) verbunden ist und wobei das Spannelement (6) einen radial äußeren Rand aufweist, der einen Überstand bildet, mit dem sich das Spannelement (6) aus dem Dichtschenkel (2) heraus bis in den Axialschenkel (1) erstreckt, **dadurch gekennzeichnet, dass** das Spannelement (6), im Querschnitt betrachtet, durch eine tellerfederförmig ausgebildete Feder (8) gebildet ist, dass die Feder (8) mit der Symmetrieachse (10) des Dichtrings in seinem herstellungsbedingten Zustand einen ersten Winkel (11) einschließt, der 65° bis 80° beträgt und dass die Feder (8) mit der Symmetrieachse (10) des Dichtrings während seiner bestimmungsgemäßen Verwendung einen zweiten Winkel (12) einschließt, der 30° bis 60° beträgt.

2. Dichtring nach Anspruch 1, **dadurch gekennzeichnet, dass** die Feder (8), im herstellungsbedingten Zustand des Dichtrings, von radial innen nach radial außen eine geradlinige Erstreckung (9) aufweist.

3. Dichtring nach einem der Ansprüche 1 oder 2, **dadurch gekennzeichnet, dass** die Feder (8) im Dichtschenkel (2) eingebettet ist.

4. Dichtring nach einem der Ansprüche 1 bis 3, **dadurch gekennzeichnet, dass** die Feder (8) vom Dichtschenkel (2) zumindest im Wesentlichen umschlossen ist.

5. Dichtring nach einem der Ansprüche 1 bis 4, **dadurch gekennzeichnet, dass** die Feder (8) aus einem Federstahl besteht.

6. Dichtring nach einem der Ansprüche 1 bis 5, **dadurch gekennzeichnet, dass** der Axialschenkel (1) und der Dichtschenkel (2) einstückig ineinander übergehend und materialeinheitlich ausgebildet sind und aus einem Dichtungswerkstoff bestehen.

7. Dichtring nach einem der Ansprüche 1 bis 6, **dadurch gekennzeichnet, dass** der Axialschenkel (1), der Dichtschenkel (2) und das Gelenk (4) einstückig ineinander übergehend und materialeinheitlich ausgebildet sind und aus einem Dichtungswerkstoff bestehen.

**8.** Dichtring nach einem der Ansprüche 1 bis 7, **dadurch gekennzeichnet, dass** der Axialschenkel (1) auf seiner dem Dichtschenkel (2) radial zugewandten Seite einen Hinterschnitt (13) aufweist, der sich in axialer Richtung (14) von einer zweiten Stirnseite (15) des Axialschenkels (1) in Richtung der ersten Stirnseite (5) und des Gelenks (4) erstreckt.

**9.** Dichtring nach einem der Ansprüche 1 bis 8, **dadurch gekennzeichnet, dass** das Gelenk (4), in radialer Richtung (7) betrachtet und im herstellungsbedingten Zustand des Dichtrings, im weitesten von der Dichtlippe (3) abgewandten Drittel (16) des Dichtrings angeordnet ist.

**10.** Dichtring nach einem der Ansprüche 1 bis 9, **dadurch gekennzeichnet, dass** die Dichtlippe (3) in radialer Richtung (7) innen oder außen des Dichtrings angeordnet ist.

**11.** Dichtring nach einem der Ansprüche 1 bis 10, **dadurch gekennzeichnet, dass** der Dichtschenkel (2) auf seiner der ersten Stirnseite (5) axial zugewandten Seite eine Schmutzlippe (17) mit zumindest einer Dichtkante (18) und einer radial inneren ersten Begrenzungsfläche (19) und einer radial äußeren zweiten Begrenzungsfläche (20) aufweist.

**12.** Dichtring nach Anspruch 11, **dadurch gekennzeichnet, dass** die Schmutzlippe (17) mittels eines zweiten Gelenks (21) am Dichtschenkel (2) angelenkt ist.

**13.** Dichtring nach einem der Ansprüche 11 oder 12, **dadurch gekennzeichnet, dass** das zweite Gelenk (21) einen radial inneren Gelenkradius (22) und einen radial äußeren Gelenkradius (23) aufweist, durch die die Schmutzlippe (17) in den Dichtschenkel (2) übergehend ausgebildet ist.

**14.** Dichtring nach einem der Ansprüche 11 bis 13, **dadurch gekennzeichnet, dass** der Dichtschenkel (2) und die Schmutzlippe (17) im herstellungsbedingten Zustand des Dichtrings radial innen- und radial außenseitig einen im Wesentlichen rechten Winkel (24, 25) begrenzen.

**15.** Dichtring nach einem der Ansprüche 11 bis 14, **dadurch gekennzeichnet, dass**, jeweils im herstellungsbedingten Zustand des Dichtrings, die Dichtlippe (3) einen ersten Durchmesser (26) und die Dichtkante (18) einen zweiten Durchmesser (27) aufweist und dass der erste Durchmesser (26) kleiner als der zweite Durchmesser (27) ist.

**16.** Dichtring nach Anspruch 15, **dadurch gekennzeichnet, dass** die den rechten Winkel (24) radial innen der Schmutzlippe (17) begrenzende erste Begrenzungsfläche (19) eine erste Länge (28) und eine dritte Begrenzungsfläche (29) des Dichtschenkels (2) eine von der ersten Länge (28) abweichende dritte Länge (30) aufweist und dass die erste Länge (28) größer als die dritte Länge (30) ist.

**17.** Dichtring nach einem der Ansprüche 11 bis 16, **dadurch gekennzeichnet, dass** der Dichtschenkel (2) und die Schmutzlippe (17) einstückig ineinander übergehend und materialeinheitlich ausgebildet sind und aus einem gummielastischen Dichtungswerkstoff bestehen.

**18.** Dichtring nach Anspruch 11, **dadurch gekennzeichnet, dass** die zweite Begrenzungsfläche (20) entlang ihrer Erstreckung konvex ausgebildet ist.

**19.** Dichtring nach einem der Ansprüche 11 bis 18, **dadurch gekennzeichnet, dass** auf der der Schmutzlippe (17) axial abgewandten Seite des Dichtschenkels (2), vom Dichtschenkel (2) in den Axialschenkel (1) übergehend, die Feder (8) angeordnet ist, zur Stabilisierung des Dichtschenkels (2) in radialer Richtung.

**20.** Dichtring nach einem der Ansprüche 1 bis 19, **dadurch gekennzeichnet, dass** die Dichtlippe (3) auf ihrer einem abzudichtenden Raum (31) axial abgewandten Seite, im Schnitt betrachtet, im Wesentlichen durch eine Parabel (32) gebildet ist, derart, dass die Parabel (32) und eine abzudichtende Oberfläche (33) über einen gesamten radialen Arbeitsbereich (34) der Dichtlippe (3) einen im Wesentlichen konstanten Dichtwinkel (35) begrenzen.

**21.** Verwendung eines Dichtrings nach einem der Ansprüche 1 bis 20 in Tunnelbohrmaschinen oder Windkraftanlagen.

**Claims**

**1.** Seal ring which, viewed in cross section, is substantially 7-shaped comprising an axial limb (1) and a sealing limb (2) with a sealing lip (3), wherein the sealing limb (2) is connected to a first end side (5) of the axial limb (1) by means of a joint (4) and a tension element (6) for stabilizing the sealing limb (2) in the radial direction (7, wherein the tension element (6) is ring-shaped, wherein the tension element (6) is connected to the sealing limb (2) and wherein the tension element (6) has a radially outer edge which forms a protrusion, with which the tension element (6) extends out from the sealing limb (2) up to the axial limb (1), **characterized in that** the tension element (6), viewed in cross section, is formed by a plate-spring-shaped spring (8), that the spring (8) includes a first angle (11) of 65° to 80° with the axis of symmetry (10) of the seal ring in its production-related state, and that the spring (8) includes a second angle (12) of 30° to 60° with the axis of symmetry (10) of the seal ring during its designated intended use.

2.  Seal ring according to Claim 1 **characterized in that** the spring (8) in the production-related state of the seal ring, has a rectilinear extent (9) from radially inside to radially outside.

3.  Seal ring according to one of Claims 1 or 2 **characterized in that** the spring (8) is embedded in the sealing limb (2).

4.  Seal ring according to one of Claims 1 to 3 **characterized in that** the spring (8) is enclosed at least substantially by the sealing limb (2).

5.  Seal ring according to one of Claims 1 to 4 **characterized in that** the spring (8) is made of a spring steel.

6.  Seal ring according to one of Claims 1 to 5 **characterized in that** the axial limb (1) and the sealing limb (2) are formed merging integrally into one another of the same material and are made from a sealing material.

7.  Seal ring according to one of Claims 1 to 6 **characterized in that** the axial limb (1), the sealing limb (2) and the joint (4) are formed merging integrally into one another and from the same material and are made from a sealing material.

8.  Seal ring according to one of Claims 1 to 7 **characterized in that** the axial limb (1) has on its side radially facing the sealing limb (2) a rear-cut section (13) which extends axially (14) from a second end side (15) of the axial limb (1) towards the first end side (5) and the joint (4).

9.  Seal ring according to one of Claims 1 to 8 **characterized in that** the joint (4), viewed in the radial direction (7) and in the production-related state of the seal ring, is arranged in the furthest third (16) of the seal ring facing away from the sealing lip (3).

10. Seal ring according to one of Claims 1 to 9 **characterized in that** the sealing lip (3) is arranged in the radial direction (7) inside or outside of the seal ring.

11. Seal ring according to one of Claims 1 to 10 **characterized in that** the sealing limb (2) has on its side axially facing the first end side (5) a dust lip (17) with at least one sealing edge (18) and a radially inner first boundary surface (19) and a radially outer second boundary surface (20).

12. Seal ring according to Claim 11 **characterized in that** the dust lip (17) is attached on the sealing limb (2) by means of a second joint (21).

13. Seal ring according to one of Claims 11 or 12 **characterized in that** the second joint (21) has a radially inner joint radius (22) and radially outer joint radius (23) by which the dust lip (17) is formed merging into the sealing limb (2).

14. Seal ring according to one of Claims 11 to 13 **characterized in that** the sealing limb (2) and the dust lip (17) in the production-related state of the seal ring define a substantially right angle (24, 25) radially on the inside or radially on the outside.

15. Seal ring according to one of Claims 11 to 14 **characterized in that** in the production-related state of the seal ring, the sealing lip (3) has a first diameter (26) and the sealing edge (18) has a second diameter (27) and that the first diameter (26) is smaller than the second diameter (27).

16. Seal ring according to Claim 15 **characterized in that** the first boundary face (19) defining the right angle (24) radially inside the dust lip (17) has a first length (28), and a third boundary surface (29) of the sealing limb (2) has a third length (30) deviating from the first length (28) and that the first length (28) is longer than the third length (30).

17. Seal ring according to one of Claims 11 to 16 **characterized in that** the sealing limb (2) and the dust lip (17) are formed merging integrally into one another and of the same material and are made from a rubber-elastic sealing material.

18. Seal ring according to Claim 11 **characterized in that** the second boundary surface (20) is formed convex along its extent.

19. Seal ring according to one of Claims 11 to 18 **characterized in that** for stabilizing the sealing limb (2) in the radial direction the spring (8) is arranged on the side of the sealing limb (2) facing axially away from the dust lip (17), merging from the sealing limb (2) into the axial limb (1).

20. Seal ring according to one of Claims 1 to 19 **characterized in that** the sealing lip (3) is formed on its side facing axially away from a space (31) to be sealed, viewed in cross section, substantially by a parabola (32) in such a way that the parabola (32) and a surface (33) being sealed define a substantially constant sealing angle (35) over an entire radial work area (34) of the sealing lip (3).

21. Use of a seal ring according to one of Claims 1 to 20 in tunnel boring machines or wind turbines.

**Revendications**

1. Bague d'étanchéité qui, considérée en coupe transversale, est réalisée essentiellement en forme de 7, comprenant une branche axiale (1) et une branche d'étanchéité (2) avec une lèvre d'étanchéité (3), la branche d'étanchéité (2) étant reliée au moyen d'une articulation (4) à un premier côté frontal (5) de la branche axiale (1) et un élément de serrage (6) pour stabiliser la branche d'étanchéité (2) dans la direction radiale (7), l'élément de serrage (6) étant réalisé sous forme annulaire, l'élément de serrage (6) étant relié à la branche d'étanchéité (2) et l'élément de serrage (6) présentant un bord radialement extérieur qui forme une saillie, avec laquelle l'élément de serrage (6) s'étend hors de la branche d'étanchéité (2) jusque dans la branche axiale (1), **caractérisée en ce que** l'élément de serrage (6), considéré en section transversale, est formé par un ressort (8) réalisé sous forme de rondelle-ressort, **en ce que** le ressort (8) forme avec l'axe de symétrie (10) de la bague d'étanchéité, dans son état de fabrication, un premier angle (11) qui est de 65° à 80° et **en ce que** le ressort (8) forme avec l'axe de symétrie (10) de la bague d'étanchéité, pendant son utilisation conforme, un deuxième angle (12) qui est de 30° à 60°.

2. Bague d'étanchéité selon la revendication 1, **caractérisée en ce que** le ressort (8), dans l'état de fabrication de la bague d'étanchéité, présente une extension rectiligne (9) de l'intérieur radial vers l'extérieur radial.

3. Bague d'étanchéité selon l'une quelconque des revendications 1 ou 2, **caractérisée en ce que** le ressort (8) est incorporé dans la branche d'étanchéité (2).

4. Bague d'étanchéité selon l'une quelconque des revendications 1 à 3, **caractérisée en ce que** le ressort (8) est au moins essentiellement entouré par la branche d'étanchéité (2).

5. Bague d'étanchéité selon l'une quelconque des revendications 1 à 4, **caractérisée en ce que** le ressort (8) est constitué d'un acier à ressort.

6. Bague d'étanchéité selon l'une quelconque des revendications 1 à 5, **caractérisée en ce que** la branche axiale (1) et la branche d'étanchéité (2) sont réalisées d'une seule pièce en se fondant l'une dans l'autre et dans un même matériau et sont constituées d'un matériau d'étanchéité.

7. Bague d'étanchéité selon l'une quelconque des revendications 1 à 6, **caractérisée en ce que** la branche axiale (1), la branche d'étanchéité (2) et l'articulation (4) sont réalisées d'une seule pièce en se fondant l'une dans l'autre et dans un même matériau et sont constituées d'un matériau d'étanchéité.

8. Bague d'étanchéité selon l'une quelconque des revendications 1 à 7, **caractérisée en ce que** la branche axiale (1) présente, sur son côté tourné radialement vers la branche d'étanchéité (2), une contre-dépouille (13) qui s'étend dans la direction axiale (14) depuis un deuxième côté frontal (15) de la branche axiale (1) en direction du premier côté frontal (5) et de l'articulation (4).

9. Bague d'étanchéité selon l'une quelconque des revendications 1 à 8, **caractérisée en ce que** l'articulation (4), considérée dans la direction radiale (7) et dans l'état de fabrication de la bague d'étanchéité, est agencée dans le tiers (16) de la bague d'étanchéité le plus détourné de la lèvre d'étanchéité (3) .

10. Bague d'étanchéité selon l'une quelconque des revendications 1 à 9, **caractérisée en ce que** la lèvre d'étanchéité (3) est agencée à l'intérieur ou à l'extérieur de la bague d'étanchéité dans la direction radiale (7).

11. Bague d'étanchéité selon l'une quelconque des revendications 1 à 10, **caractérisée en ce que** la branche d'étanchéité (2) présente, sur son côté tourné axialement vers le premier côté frontal (5), une lèvre antisalissure (17) avec au moins une arête d'étanchéité (18) et une première surface de délimitation (19) radialement intérieure et une deuxième surface de délimitation (20) radialement extérieure.

12. Bague d'étanchéité selon la revendication 11, **caractérisée en ce que** la lèvre antisalissure (17) est articulée sur la branche d'étanchéité (2) au moyen d'une deuxième articulation (21).

13. Bague d'étanchéité selon l'une quelconque des revendications 11 ou 12, **caractérisée en ce que** la deuxième articulation (21) présente un rayon d'articulation radialement intérieur (22) et un rayon d'articulation radialement extérieur (23), par lesquels la lèvre antisalissure (17) est réalisée de manière à se fondre dans la branche d'étanchéité (2).

14. Bague d'étanchéité selon l'une quelconque des revendications 11 à 13, **caractérisée en ce que** la branche d'étanchéité (2) et la lèvre antisalissure (17) délimitent, dans l'état de fabrication de la bague d'étanchéité, un angle (24, 25) essentiellement droit radialement à l'intérieur et radialement à l'extérieur.

15. Bague d'étanchéité selon l'une quelconque des revendications 11 à 14, **caractérisée en ce que**, respectivement dans l'état de fabrication de la bague d'étanchéité, la lèvre d'étanchéité (3) présente un premier diamètre (26) et l'arête d'étanchéité (18) un deuxième diamètre (27) et **en ce que** le premier diamètre (26) est inférieur au deuxième diamètre (27).

16. Bague d'étanchéité selon la revendication 15, **caractérisée en ce que** la première surface de délimitation (19) délimitant l'angle droit (24) radialement à l'intérieur de la lèvre antisalissure (17) présente une première longueur (28) et une troisième surface de délimitation (29) de la branche d'étanchéité (2) présente une troisième longueur (30) différente de la première longueur (28) et **en ce que** la première longueur (28) est supérieure à la troisième longueur (30) .

17. Bague d'étanchéité selon l'une quelconque des revendications 11 à 16, **caractérisée en ce que** la branche d'étanchéité (2) et la lèvre antisalissure (17) sont réalisées d'une seule pièce en se fondant l'une dans l'autre et dans un même matériau et sont constituées d'un matériau d'étanchéité ayant l'élasticité du caoutchouc.

18. Bague d'étanchéité selon la revendication 11, **caractérisée en ce que** la deuxième surface de délimitation (20) est réalisée sous forme convexe le long de son extension.

19. Bague d'étanchéité selon l'une quelconque des revendications 11 à 18, **caractérisée en ce que** le ressort (8) est agencé sur le côté de la branche d'étanchéité (2) détourné axialement de la lèvre antisalissure (17), en se fondant de la branche d'étanchéité (2) dans la branche axiale (1), pour stabiliser la branche d'étanchéité (2) dans la direction radiale.

20. Bague d'étanchéité selon l'une quelconque des revendications 1 à 19, **caractérisée en ce que** la lèvre d'étanchéité (3) est essentiellement formée par une parabole (32) sur son côté détourné axialement d'un espace (31) à étanchéifier, considéré en coupe, de telle sorte que la parabole (32) et une surface (33) à étanchéifier délimitent un angle d'étanchéité (35) essentiellement constant sur toute une zone de travail radiale (34) de la lèvre d'étanchéité (3).

21. Utilisation d'une bague d'étanchéité selon l'une quelconque des revendications 1 à 20 dans des machines de forage de tunnels ou des éoliennes.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019109273 A1
- EP 2988035 A1
- DE 102009053558 A1
- DE 102016011448 A1
- EP 1669647 A1
- US 2697623 A
- US 2797944 A
- EP 3872373 A1